# EUROPEAN PATENT SPECIFICATION

(11) **EP 3 713 050 B1**
(45) Date of publication and mention of the grant of the patent: **25.05.2022**
(21) Application number: 19164551.4
(22) Date of filing: 22.03.2019
(51) Int. Cl.: H02K 3/02, H02K 17/16, H02K 19/10, H02K 19/14

(54) **INDUCTION MOTOR**
INDUKTIONSMOTOR
MOTEUR À INDUCTION

(43) Date of publication of application: 23.09.2020
(73) Proprietor: ABB Schweiz AG, 5400 Baden (CH)
(72) Inventor: GROP, Henrik, 722 15 Västerås (SE); PERSSON, Holger, 723 53 Västerås (SE)
(74) Representative: Kransell & Wennborg KB

(56) References cited:
- EP-A1- 3 373 424
- DE-A1-102013 016 654
- JP-A- S 566 658
- JP-A- S61 116 952
- US-A- 1 777 320
- US-A1- 2013 119 800

## Description

### TECHNICAL FIELD

The present disclosure relates to electric motors of the types solid salient pole synchronous motors and squirrel cage induction motors. The present disclosure also relates to a method for producing such electric motors.

### BACKGROUND ART

Squirrel cage induction motors are the work horse of the industry since approximately 120 years. They are robust, cost-efficient motors. A squirrel cage induction motor comprises a stator carrying a three-phase winding and a rotor with a squirrel cage comprising either die-cast or machined short-circuited rotor bars. The use of die-cast rotor bars is more common in low power, small machine applications while machined bars are more common in high power, large machine applications. The reason for this is mainly the difficulty to die cast long rotor bars due to the cooling of the molten material. The rotor bars are most often made of copper or aluminium. By changing the material of the rotor bars, the induction motor obtains different starting characteristics. A low resistivity material such as, e.g., copper will have a break-down torque occurring at a higher rotor speed than a high resistivity material, such as, e.g., aluminium. The starting torque is higher for a high resistivity material, such as, e.g., aluminium, than for a material with lower resistivity, such as, e.g., copper. Today, it is possible to start high load torques by using high-resistivity materials in the bars but since the entire bar is made of a single material, these motors suffer from poor efficiency. Copper rotor induction motors will have higher efficiency than aluminium rotor induction motors. US 2014/0091668 A1 describes hybrid rotor bar assemblies, electric motors including hybrid rotor bar assemblies and methods of assembling the same. The hybrid rotor bar assembly includes a copper rotor bar, and an aluminium shims lining the rotor bars. The aluminium shim has the effect of tightening the copper rotor bars in the squirrel cage so as not to shave or abrade the soft copper rotors as they expand or shrink. The aluminium shims also functions as a secondary rotor bar which improves the starting torque of the electric motor.

DE 10 2013 016654 A1 discloses a squirrel-cage induction motor, which has a rotor constructed of laminated steel sheets with a plurality of slots. A copper wire extending in a lamination direction is arranged in the slots, and a gap-filling conductor is poured into the slot.

From US 2013/119800 A1, a dynamo-electric machine is known which comprises a rotor that is rotatable within a stator provided with stator windings. The rotor has an annular core of ferromagnetic material provided with external circumferential layers, and the layers comprise an environmental enclosure and at least one sleeve of electrically conductive material disposed between the rotor core and the environmental enclosure. The environmental enclosure is made from an electrically conductive material and the electrical resistance of the environmental enclosure is higher than that of the or each sleeve.

US 1 777 320 A discloses a rotor with radial slits, wherein an axially oriented coarse copper wire is fitted at the bottom of each slit before pouring Zamak, an alloy with 93% zinc. This produces a heterogenous copper-Zamak body in each slit.

EP 3 373 424 A1 relates to a method for producing a rotor of an electric machine by additive manufacturing. The rotor is preferably designed as a squirrel-cage rotor. The end rings and/or squirrel-cage bars are produced by means of a metal powder application method.

JP S16 116952 A discloses a rotor for an electrical machine, where homogeneous rotor bars of 65% Cu and 35% Zn are inserted into a rotor core of iron in a direction parallel with the rotation axis.

However, there still exists a need for an improved electric induction motor having rotor bars, which electric induction motor has improved efficiency compared to traditional high resistivity rotors in combination with an improved starting torque, compared to electric induction motors according to the prior art. The need for improved starting torque characteristics exists also for synchronous electric motors.

### SUMMARY OF THE INVENTION

An object of the present invention is to provide a rotor for an electric induction machine and/or a synchronous machine of the solid salient pole type, which rotor at least alleviates one of the problems with the prior art.

Another object of the present invention is to provide a rotor for a squirrel cage induction motor and/or a synchronous machine of the solid salient pole type, which rotor enables an electric induction motor and/or a synchronous machine of the solid salient pole type which has high efficiency and good starting torque characteristics when operated as a motor, compared to electric machines according to the prior art.

At least one of these objects is provided with a rotor according to the independent claim.

Further advantages are provided with the features of the dependent claims.

According to a first aspect of the present invention, there is provided a rotor according to claim 1.

When the rotor is subject to a magnetic field from, e.g., a stator, a current is induced in the conducting elements and a torque is produced on the rotor.

The part of the conducting element at the largest distance from the rotor axis will determine the starting characteristics at high slips as the current distribution is determined by the skin effect. As the rotor speed increases, the current in the conducting element will successively progress deeper into the conducting element due to the skin effect.

The resistivity in the conducting element may decrease continuously with a decreasing distance from the rotor axis. By having a continuously decreasing resistivity the starting characteristics and the efficiency at steady state of an electric machine, in which the rotor is arranged, may be optimized.

As an alternative to a continuously decreasing resistivity the resistivity in the conducting element may decrease in steps with a decreasing distance from the rotor axis. A conducting element in which the resistivity decreases in steps may be easier to manufacture than a conducting element with continuously decreasing resistivity.

The resistivity of the conducting element may be constant at a specific distance from the rotor axis, i.e., the resistivity profile perpendicular to the length axis of the conducting element is the same along the entire conducting element.

The rotor may be of the solid salient pole type. This type of rotor has conducting elements of solid metal such as, e.g., pole shoes.

As a second alternative the rotor may be for a squirrel cage induction motor and the conducting element a rotor bar. A squirrel cage induction motor usually comprises a number of rotor bars which are inserted in slots in the rotor cage, which consists of laminated steel plates.

The rotor bar may comprise at least a first layer constituted of a material with a first resistivity, and a second layer constituted of a material with a second resistivity which is lower than the first resistivity, wherein the second layer is arranged closer to the rotor axis than the first layer. This is the simplest embodiment of rotor bars for a rotor for a squirrel cage induction motor and provides a better combination of starting torque characteristics and efficiency at steady state.

The first layer may consist an alloy of copper and zinc, and the second layer may consist of copper. This combination of materials gives the desired difference in

The rotor bar may have a continuously decreasing resistivity with a decreasing distance from the rotor axis. By having a continuously decreasing resistivity the characteristics of the electric induction motor may be optimized.

The rotor bar consists of by an alloy of copper and zinc, wherein the ratio of zinc in the alloy decreases with a decreasing distance to the rotor axis. This is a favourable embodiment of the rotor bar. The rotor bar may be manufactured by additive manufacturing. This gives a large degree of freedom in how the resistivity varies in the rotor bar.

In the following preferred embodiments of the invention will be described with reference to the drawings. The drawings are not drawn to scale. Similar features in the different drawings will be denoted by the same reference numerals.

### BRIEF DESCRIPTION OF THE DRAWINGS

Figure 1 shows schematically an electric induction motor of the type squirrel cage induction motor with a rotor according to an embodiment of the invention.
Figure 2 shows schematically the electric induction motor 1 of Fig. 1 in a longitudinal cross sectional view.
Figure 3a-3c shows three different embodiments of a rotor bar of the motor of Figs. 1 and 2.
Figure 4 shows a cross sectional view of a solid salient pole synchronous motor with a rotor according to another embodiment of the invention.
Figure 5 shows a comparison of starting characteristic between bars of different materials.

### DETAILED DESCRIPTION

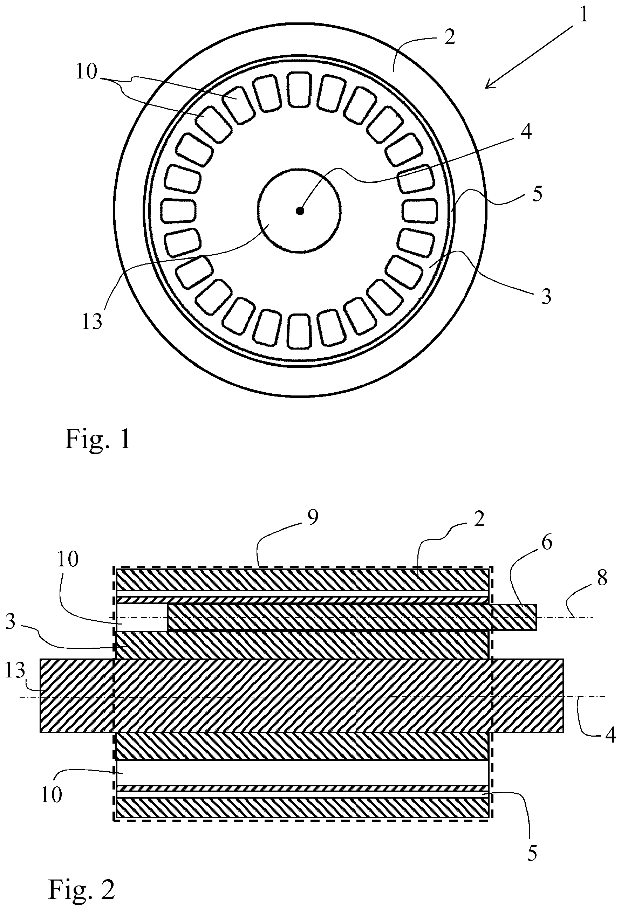

Figure 1 shows schematically an electric induction motor 1 of the type squirrel cage induction motor with a rotor according to an embodiment of the invention. The motor 1 comprises a stator 2, and a rotor 3 with a rotor axis 4, arranged with an air gap 5 between the rotor 3 and the stator 2. The rotor 3 comprises conducting material, and during operation of the motor 1, the stator 2 is arranged to provide a main magnetic field, which produces a torque on the rotor 3 in relation to the stator 2. The rotor 3 comprises a rotor shaft 13 through which the rotor axis 4 extends. The rotor comprises a large number of slots 10 in which rotor bars are arranged.

Figure 2 shows schematically the electric induction motor 1 of Fig. 1 in a longitudinal cross sectional view. Two of the slots 10 are shown. The conducting material in the rotor 3 comprises a number of conducting elements of solid conducting material in the form of rotor bars 6, of which only one is shown in Fig. 2. The rotor bar 6 is shown partially inserted in the corresponding slot 6. The resistivity within each rotor bar 6 decreases with a decreasing distance from the rotor axis 4. The rotor bar 6 comprises a length axis 8 and extends with its length axis 8 essentially parallel to the rotor axis 4 along at least half of the main magnetic field provided by the stator 2 during operation. In Fig. 2, however, the rotor bar 6 extends along the entire iron in the rotor. The main magnetic field of the stator 2 is constrained by the iron in the stator 2 and the rotor 3 as indicated by the boundary 9. The main magnetic field of the stator 2 is indicated with the dotted line 9. The rotor 3 comprises laminated steel sheets in which slots 10 are formed. The rotor bars 6 are arranged in the slots 10.

The rotor bars 6 may be manufactured by additive manufacturing (AM). With the present technology it is possible to 3D-print a rotor bar 6 consisting of several materials or even mixing materials to have a continuous transition between different materials throughout the height perpendicular to the length axis 8 of the rotor bar 6. In this way, the starting characteristics of the motor 1 may be optimized throughout the starting operation of the motor 1 with a smaller impact on efficiency compared to the single material rotor bar design according to the prior art. This is due to the low resistivity in the parts of the rotor bar 6 being closer to the rotor axis 4. In theory, the rotor bar 6 can be designed such that the motor 1 can ride on the break-down torque throughout the entire starting operation. This would result in extremely high torque per current performance. In practice, this would not be possible as this requires very high resistance at the top portion of the rotor bar 6. Still, a great improvement of the starting characteristics is to be expected as well as a higher efficiency than a motor 1 using a single homogenous material in the rotor bar 6.

As the frequency induced in the rotor 3 is decreased with the speed of the rotor 3, the skin depth of the rotor bars 6 will increase and the current in the rotor bars 6 will penetrate deeper and deeper into the rotor bars 6 as the motor 1 accelerates. It is therefore desirable to have a high resistivity in the parts of the rotor bars 6 at the largest distance from the rotor axis 4, for starting purposes and to have lower resistivity in the parts of the rotor bars 6 closer to the rotor axis 4 for steady-state operation. Thus, a rotor bar 6 having a varying resistivity along it height perpendicular to the length axis 8 will provide good starting characteristics of the motor while maintaining a high efficiency at steady-state operation. This kind of multi-material rotor bar 6 design can be manufactured by additive manufacturing or by other means.

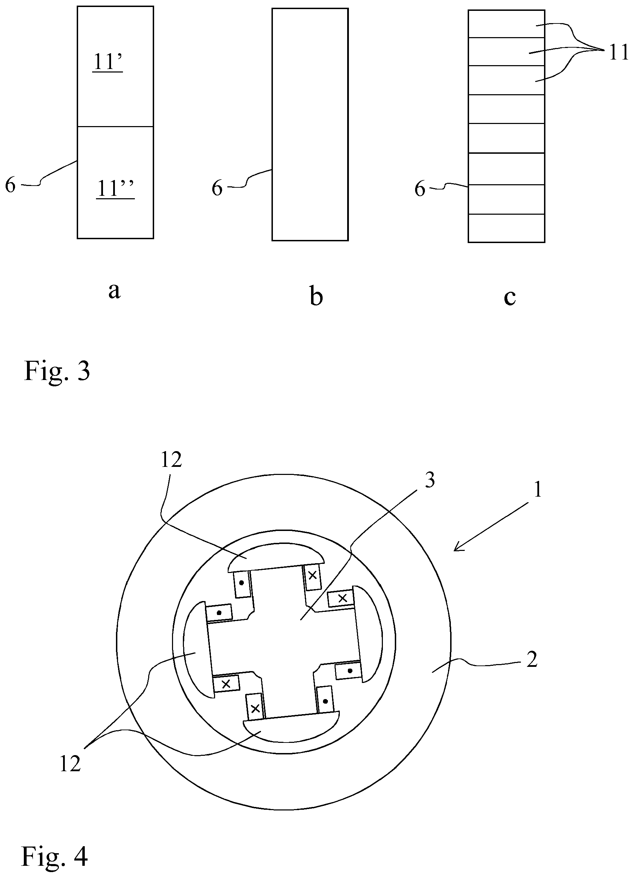

Figures 3a-3c show three different embodiments of a rotor bar 6. The rotor bar shown in Fig. 3a has two layers 11' and 11". The uppermost layer 11' in Fig. 3a is to be arranged at the largest distance from the rotor axis 4 and has a higher resistivity than the lowermost layer 11". The uppermost layer 11' may consist of an alloy of copper and zinc while the innermost layer may be made of pure copper. A suitable alloy for the layer at the largest distance from the rotor axis 4 is an alloy sold under the name CuZn37. The rotor bar 6 shown in Fig. 3b has a continuously decreasing resistivity with a decreasing distance from the rotor axis. The rotor bar shown in Fig. 3c has 8 different layers 11 arranged in a slot 10. The rotor bars 6 in figures 3a-3c are illustrated with rectangular shapes. However, the rotor bars 6 may have any shapes. The shape of the layers does not have to be rectangular and the thickness of the layers 11 does not have to be constant. The material in the different layers 11 consists of an alloy of copper and zinc with a decreasing ratio of zinc in the layers towards the rotor axis 4. The layer closest to the rotor axis 4 may be of essentially pure copper. The rotor bars shown in Fig. 3a-3c are preferably manufactured using an additive manufacturing technique. This is especially important for the embodiments shown in Fig. 3b and 3c, which would be particularly difficult to manufacture with other methods.

Fig. 4 shows in an axial view a motor 1 in the form of a solid salient pole synchronous motor with a rotor according to another embodiment of the invention. The motor 1 comprises a stator 2, and a rotor 3 with a rotor axis 4, arranged with an air gap 5 between the rotor 3 and the stator 2. The rotor 3 comprises conducting material, and during operation of the motor 1, the stator 2 is arranged to provide a main magnetic field, which produces a torque on the rotor 3 in relation to the stator 2. The rotor 3 comprises conducting elements in the form of pole shoes 12. The pole shoes 12 comprises a varying resistivity with a decreasing resistivity with an decreasing distance from the rotor axis 4. Pole shoes in a solid salient pole synchronous machine are, due to strength considerations and magnetic properties, usually made from steel.

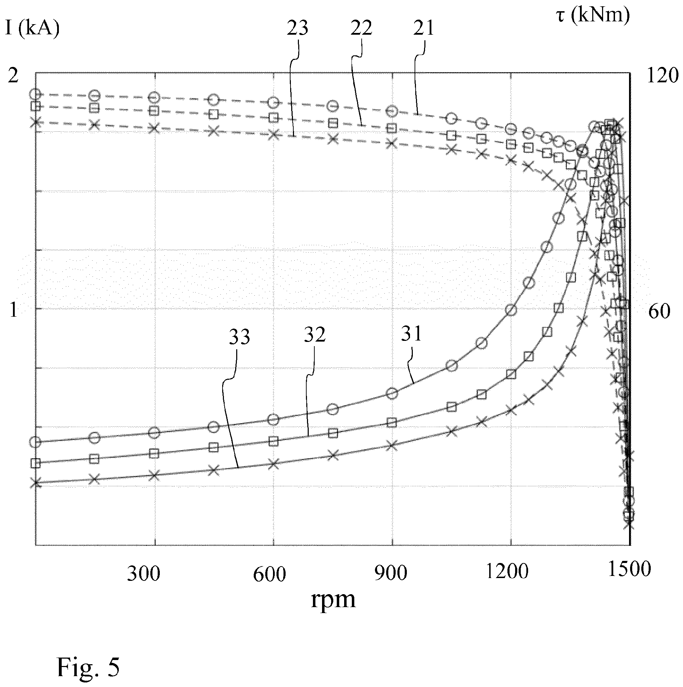

Figure 5 shows a comparison of starting characteristic between rotor bars 6, shown in Fig. 3, of different materials. Curve 21 shows the current on the left axis as a function of the rotational speed of the induced magnetic field in the rotor 3 for rotor bars 6 of copper. Curve 22 shows the current for rotor bars 6 of aluminium, while curve 23 shows the current for rotor bars 6 of CuZn37.Curve 31 shows the torque on the right axis as a function of the speed of the magnetic field in the rotor 3 for rotor bars of copper. Curve 32 shows the torque for rotor bars 6 of aluminium, while curve 33 shows the torque for rotor bars 6 of CuZn37. The scale on the left side is in kiloamperes (kA). The scale on the right side is in kilonewton meters (kNm). The speed on the x-axis shows rotational speed of the rotor in revolutions per minute (rpm). The rotational speed is 1500 rpm when the rotor runs at synchronous speed. The rotational speed is zero when the rotor is at standstill. It can be clearly seen in Fig. 5 that the torque at 1500 rpm, for CuZn37 is highest followed by aluminium and copper. Also, it is shown that the current at zero speed, is highest for copper followed by aluminium and CuZn37. A high speed for the breakdown torque is equivalent to low rotor resistive losses.

The above described embodiments may be amended in many ways without departing from the scope of the invention, which is limited only by the appended claims.

The idea of including conducting elements with a decreasing resistivity can also be applied to other machine types being started asynchronously such as line started permanent magnet motors. Furthermore, the same concept can be applied to linear machines. In the case of a linear machine corresponding motion elements moving in relation to the stator shall be considered to constitute a rotor, the rotor axis of which shall be considered to be infinitely far away from the motion elements.

## Claims

1. A rotor (3) for an electric machine (1), the rotor (3) comprising a rotor axis (4) about which the rotor (3) is configured to rotate, and at least one conducting element (6, 12) configured to conduct current in the direction of the rotor axis (4), wherein the resistivity within the conducting element (6, 12) decreases with a decreasing distance from the rotor axis (4), **characterized in that** the conducting element (6, 12) consists of an alloy of copper and zinc, wherein the ratio of zinc in the alloy decreases with a decreasing distance from the rotor axis (4).

2. The rotor (3) according to claim 1, wherein the resistivity in the conducting element (6, 12) decreases continuously with a decreasing distance from the rotor axis (4).

3. The rotor (3) according to claim 1, wherein the resistivity in the conducting element (6, 12) decreases in steps with a decreasing distance from the rotor axis (4).

4. The rotor (3) according to any one of the preceding claims, wherein the resistivity of the conducting element (6, 12) is constant at a specific distance from the rotor axis (4).

5. The rotor (3) according to any one of the preceding claims, wherein the conducting element (6, 12) comprises at least
- a first layer (11') consisting of a material with a first resistivity, and
- a second layer (11") consisting of a material with a second resistivity which is lower than the first resistivity, wherein the second layer (11") is arranged closer to the rotor axis (4) than the first layer.

6. The rotor (3) according to claim 5, wherein the first layer (11') consists of an alloy of copper and zinc, and the second layer (11") consists of copper.

7. The rotor (3) according to any one of the preceding claims, wherein the conducting element (6, 12) has been manufactured by additive manufacturing.

8. The rotor (3) according to any one of the preceding claims, wherein the rotor (3) is of solid salient pole type.

9. The rotor (3) according to any one of the preceding claims, wherein the conducting element (6, 12) is a rotor bar (6).

10. The rotor (3) according to any one of the preceding claims, wherein the conducting element (6, 12) is a pole shoe (12).

11. An electric machine (1) comprising a rotor (3) according to any one of the preceding claims.

12. A squirrel cage induction motor (1) comprising a rotor (3) according to any one of claims 1 to 10.

## Patentansprüche

1. Rotor (3) für eine Elektromaschine (1), wobei der Rotor (3) eine Rotorachse (4), um die der Rotor (3) auslegungsgemäß rotiert, und zumindest ein leitfähiges Element (6, 12) aufweist, das ausgelegt ist, um Strom in Richtung der Rotorachse (4) zu leiten, wobei der spezifische Widerstand innerhalb des leitfähigen Elements (6, 12) mit abnehmendem Abstand zu der Rotorachse (4) abnimmt, **dadurch gekennzeichnet, dass** das leitfähige Element (6, 12) aus einer Legierung aus Kupfer und Zink besteht, wobei das Verhältnis von Zink in der Legierung mit einem abnehmenden Abstand zu der Rotorachse (4) abnimmt.

2. Rotor (3) nach Anspruch 1, wobei der spezifische Widerstand in dem leitfähigen Element (6, 12) kontinuierlich mit einem abnehmenden Abstand zu der Rotorachse (4) abnimmt.

3. Rotor (3) nach Anspruch 1, wobei der spezifische Widerstand in dem leitfähigen Element (6, 12) in Stufen mit einem abnehmenden Abstand zu der Rotorachse (4) abnimmt.

4. Rotor (3) nach einem der vorhergehenden Ansprüche, wobei der spezifische Widerstand des leitfähigen Elements (6, 12) in einem bestimmten Abstand zu der Rotorachse (4) konstant ist.

5. Rotor (3) nach einem der vorhergehenden Ansprüche, wobei das leitfähige Element (6, 12) zumindest Folgendes aufweist:
- eine erste Schicht (11'), die aus einem Material mit einem ersten spezifischen Widerstand besteht, und
- eine zweite Schicht (11"), die aus einem Material mit einem zweiten spezifischen Widerstand besteht, der niedriger als der erste spezifische Widerstand ist, wobei die zweite Schicht (11") näher an der Rotorachse (4) als die erste Schicht angeordnet ist.

6. Rotor (3) nach Anspruch 5, wobei die erste Schicht (11') aus einer Legierung aus Kupfer und Zink besteht und die zweite Schicht (11") aus Kupfer besteht.

7. Rotor (3) nach einem der vorhergehenden Ansprüche, wobei das leitfähige Element (6, 12) durch generative Fertigung gefertigt worden ist.

8. Rotor (3) nach einem der vorhergehenden Ansprüche, wobei der Rotor (3) vom massiven Schenkelpoltyp ist.

9. Rotor (3) nach einem der vorhergehenden Ansprüche, wobei das leitfähige Element (6, 12) ein Rotorstab (6) ist.

10. Rotor (3) nach einem der vorhergehenden Ansprüche, wobei das leitfähige Element (6, 12) ein Polschuh (12) ist.

11. Elektromaschine (1), aufweisend einen Rotor (3) nach einem der vorhergehenden Ansprüche.

12. Kurzschluss-Käfigläufermotor (1), aufweisend einen Rotor (3) gemäß einem der Ansprüche 1 bis 10.

## Revendications

1. Rotor (3) pour une machine électrique (1), le rotor (3) comprenant un axe de rotor (4) autour duquel le rotor (3) est configuré pour tourner, et au moins un élément conducteur (6, 12) configuré pour conduire un courant dans la direction de l'axe de rotor (4), la résistivité à l'intérieur de l'élément conducteur (6, 12) diminuant avec une distance décroissante depuis l'axe de rotor (4), **caractérisé en ce que** l'élément conducteur (6, 12) consiste en un alliage de cuivre et de zinc, la proportion de zinc dans l'alliage diminuant avec une distance décroissante depuis l'axe de rotor (4).

2. Rotor (3) selon la revendication 1, dans lequel la résistivité dans l'élément conducteur (6, 12) diminue de façon continue avec une distance décroissante depuis l'axe de rotor (4) .

3. Rotor (3) selon la revendication 1, dans lequel la résistivité dans l'élément conducteur (6, 12) diminue par paliers avec une distance décroissante depuis l'axe de rotor (4).

4. Rotor (3) selon l'une quelconque des revendications précédentes, dans lequel la résistivité de l'élément conducteur (6, 12) est constante à une distance spécifique depuis l'axe de rotor (4).

5. Rotor (3) selon l'une quelconque des revendications précédentes, dans lequel l'élément conducteur (6, 12) comprend au moins
- une première couche (11') consistant en un matériau avec une première résistivité, et
- une deuxième couche (11") consistant en un matériau avec une deuxième résistivité qui est inférieure à la première résistivité, la deuxième couche (11") étant disposée plus près de l'axe de rotor (4) que la première couche.

6. Rotor (3) selon la revendication 5, dans lequel la première couche (11') consiste en un alliage de cuivre et de zinc, et la deuxième couche (11") consiste en du cuivre.

7. Rotor (3) selon l'une quelconque des revendications précédentes, dans lequel l'élément conducteur (6, 12) a été fabriqué par fabrication additive.

8. Rotor (3) selon l'une quelconque des revendications précédentes, le rotor (3) étant d'un type à pôles saillants pleins.

9. Rotor (3) selon l'une quelconque des revendications précédentes, dans lequel l'élément conducteur (6, 12) est une barre de rotor (6).

10. Rotor (3) selon l'une quelconque des revendications précédentes, dans lequel l'élément conducteur (6, 12) est un épanouissement polaire (12).

11. Machine électrique (1) comprenant un rotor (3) selon l'une quelconque des revendications précédentes.

12. Moteur à induction à cage d'écureuil (1) comprenant un rotor (3) selon l'une quelconque des revendications 1 à 10.
